# DEMANDE DE BREVET EUROPEEN

(11) **EP 1 229 149 A1**
(43) Date de publication de la demande: **07.08.2002**
(21) Numéro de dépôt: 01810099.0
(22) Date de dépôt: 31.01.2001
(51) Int. Cl.: C25B 11/02, C02F 1/46

(54) **Electrode de grandes dimensions**

(71) Demandeur: CSEM Centre Suisse d'Electronique et de Microtechnique SA, 2007 Neuchâtel (CH)
(72) Inventeur: Haenni, Werner, 2034 Peseux (CH); Perret, André, 2206 Les Geneveys-sur-Coffrane (CH); Richen, Philippe, 68640 Muespach-le-Haut (FR)
(74) Mandataire: Gresset, Jean

(57) **Abrégé**

L'invention concerne une électrode de grandes dimensions, caractérisée en ce qu'elle comporte:
- une plaque support métallique (10);
- une pluralité de carreaux (14) fixés sur une face (12) de ladite plaque en relation électrique avec elle et comportant chacun un substrat à base de silicium rendu conducteur, avec, du côté plaque, une couche de liaison et, du côté opposé, une couche de diamant rendu conducteur; et
- une couche isolante (16) recouvrant à la fois les portions de ladite face (12) qui ne sont pas recouvertes par les carreaux (14) et les flancs de ceux-ci.

## Description

La présente invention concerne une électrode de grandes dimensions.

De telles électrodes, actuellement réalisées en métal, sont utilisées industriellement dans de grandes cellules d'électrolyse destinées, notamment, à des synthèses organiques ou inorganiques ou à la dépollution d'eaux usées par oxydation des contaminants qu'elles contiennent.

Les électrodes de ces installations ont des dimensions pouvant aller de 20 x 25 cm à 100 x 200 cm.

Or, il est maintenant connu de fabriquer des électrodes formées d'un substrat de silicium recouvert d'une couche compacte de diamant, tous deux rendus conducteurs par dopage. Ce type d'électrode présente le double avantage d'avoir une très longue durée de vie et de ne pas libérer de produit polluant dans l'électrolyte.

Malheureusement, les différences entre les coefficients de dilatation thermique des couches de diamant polycristallin dopé ( 1.16 x 10⁻⁶ m/m°C), du substrat de silicium monocristallin dopé (environ 2.5 x 10⁻⁶ m/m°C) et, surtout, du matériau pouvant constituer un support, tel que l'aluminium, le titane, le zirconium, le niobium, le tantale, l'acier inoxydable, .... (de 12 à 15 x 10⁻⁶ m/m°C), génèrent des contraintes responsables de la déformation des électrodes, d'autant plus importantes qu'elles sont de grandes dimensions. Cela pose un sérieux problème puisque, bien entendu, les électrodes doivent rester parallèles les unes aux autres pour que l'installation fonctionne correctement.

Par ailleurs, certains équipements, tels que les électrolyseurs de Eilenburger pour la formation de d'acide peroxodisulfurique, travaillent un empilement d'électrodes bipolaires de 100 sur 190 cm appliquées sous pression les unes contre les autres. On imagine aisément que, si des électrodes silicium-diamant sont utilisées dans ce genre d'installation, elles risquent fort de se briser.

Voilà pourquoi, il n'a pas été possible, jusqu'ici, de travailler de manière satisfaisante avec des électrodes silicium-diamant ayant les mêmes dimensions que les grandes électrodes métalliques existantes.

La présente invention a pour but de surmonter cette difficulté en proposant une structure d'électrode silicium-diamant sur support, qui a les dimensions des grandes électrodes métalliques existantes mais reste à peu près plane et, à tout le moins, flexible en toute condition. Les installations peuvent ainsi bénéficier des avantages importants que procurent les électrodes silicium-diamant sans souffrir de leurs inconvénients.

De façon plus précise, l'invention concerne une électrode de grandes dimensions, caractérisée en ce qu'elle comporte:
- une plaque support métallique,
- une pluralité de carreaux fixés sur une face de ladite plaque en relation électrique avec elle et comportant chacun un substrat à base de silicium rendu conducteur, avec, du côté plaque, une couche de liaison et, du côté opposé, une couche de diamant rendu conducteur; et
- une couche isolante recouvrant à la fois les portions de ladite face qui ne sont pas recouvertes par les carreaux et les flancs de ceux-ci.

De façon avantageuse, le métal constituant la plaque support est choisi parmi l'aluminium, le titane, le zirconium, le niobium, l'acier inoxydable et tout métal susceptible d'être passivé par formation, à sa surface, d'une couche isolante, étanche et stable obtenue par oxydation chimique ou électrochimique.

Le substrat des carreaux est, de préférence, en silicium ou carbure de silicium rendu conducteur par dopage à l'aide d'un métal tel que le titane, le zirconium ou le niobium.

La couche de liaison des carreaux à la plaque support est, avantageusement, en aluminium, aluminium-silicium, argent, platine ou platine-argent, tandis qu'une sous-couche d'accrochage en titane est interposée entre le substrat des carreaux et cette couche de liaison.

De préférence, la couche de diamant des carreaux est rendue conductrice par dopage à l'aide de bore et/ou d'azote.

Enfin, la couche isolante est, avantageusement, un oxyde du métal de la plaque support.

L'invention propose, en outre, plusieurs modes de fixation des carreaux sur la plaque support, qui sont présentés ci-après:
- la couche de liaison des carreaux est en argent et est fixée sur la plaque support au moyen d'une pâte polymérisable à base d'argent;
- la couche de liaison des carreaux est en argent, la face de la plaque support est recouverte d'une couche d'argent et ces deux couches sont soudées ensemble directement par chauffage;
- la couche de liaison des carreaux est en argent, la face de la plaque support est recouverte d'une couche d'argent et ces deux couches sont soudées ensemble au moyen d'un alliage étain-plomb;
- la couche de liaison des carreaux est en aluminium et est soudée directement sur la plaque support;
- la couche de liaison des carreaux est en aluminium et est fixée sur la plaque support par soudage au moyen d'un alliage d'aluminium-silicium;
- la couche de liaison des carreaux est en aluminium et est fixée sur la plaque support par l'intermédiaire d'une mini-plaquette centrale en silicium dont les deux faces, recouvertes d'une couche d'aluminium, sont respectivement soudées directement à la couche de liaison et à la plaque;
- la couche de liaison des carreaux est en aluminium et est fixée sur la plaque support par l'intermédiaire d'une mini-plaquette centrale en silicium dont les deux faces, recouvertes d'une couche d'aluminium, sont respectivement soudées à la couche de liaison et à la plaque au moyen d'un alliage d'aluminium-silicium.

D'autres caractéristiques de l'invention ressortiront de la description qui va suivre, faite en regard des dessins annexés, dans lesquels:
- les figures 1a et 1b représentent une électrode selon l'invention, respectivement vue en plan et en coupe;
- la figure 2 est une vue en coupe, à échelle agrandie, d'un des carreaux de l'électrode de la figure 1; et
- les figures 3 à 9 illustrent différentes manières de fixer les carreaux sur une plaque support métallique.

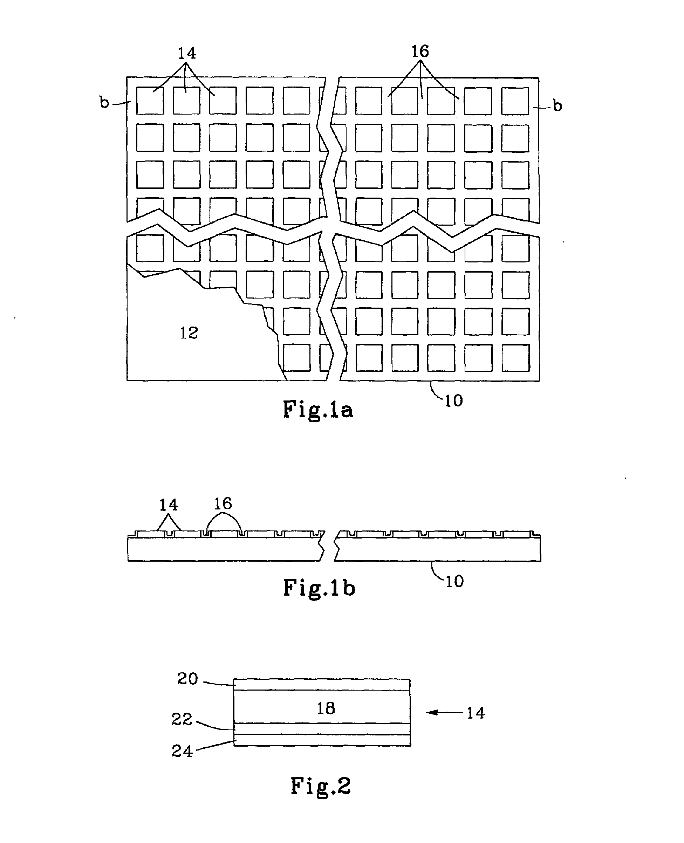

On se référera, tout d'abord, aux figures 1a et 1b qui montrent, en 10, une plaque support métallique ayant, typiquement, un épaisseur de 5 mm, une longueur de 100 cm et une largeur de 60 cm. Le métal constituant cette plaque est choisi parmi l'aluminium, le titane, le zirconium, le niobium, l'acier inox et, de manière générale, tout métal susceptible d'être passivé par formation à sa surface d'une couche isolante obtenue par oxydation chimique ou électrochimique.

La face supérieure 12 de la plaque 10 reçoit une mosaïque de carreaux 14, ayant avantageusement une forme carrée de 5 à 25 mm de côté, avec une épaisseur d'environ 2 mm. Ces carreaux sont alignés régulièrement en lignes et colonnes avec un espace entre eux de 100 µm à 1 mm. Comme le montre la figure 1b, les portions de la face 12 non recouvertes par les carreaux 14, de même que les flancs de ceux-ci, sont recouverts d'une couche isolante 16 formée, comme déjà mentionné, par oxydation une fois que les carreaux ont été fixés sur la plaque 10. Cette couche isolante peut être recouverte, à son tour, afin de renforcer son étanchéité, par une couche supplémentaire en polyvinyledifluorure (PVDF), polyépoxyde ou un autre polymère.

La figure 2 montre que chaque carreau 14 comporte un substrat 18, réalisé en silicium ou carbure de silicium qui a été dopé, par des procédés connus de l'homme de métier, de manière à réduire sa résistivité à une valeur qui, typiquement, est de l'ordre de 1 à 3 mΩcm.

La face supérieure du substrat 18 est recouverte d'une couche de diamant 20 rendu conducteur par dopage à l'aide de bore, d'azote ou d'un mélange des deux selon un procédé qui est décrit, par exemple, dans la demande de brevet EP 00810147.9 du 22 février 2000.

La face inférieure du substrat 18 est métallisée par le dépôt d'une couche d'accrochage 22 en titane puis, sur celle-ci, d'une couche de liaison 24 en aluminium, aluminium-silicium, argent, platine ou platine-argent.

Typiquement, le substrat 18 a une épaisseur de 0.5 à 2 mm, la couche de diamant 20 une épaisseur de 0.1 à 3 µm, la couche d'accrochage 22 une épaisseur de 10 à 200 nm et la couche de liaison 24 une épaisseur de 100 nm à 2 µm.

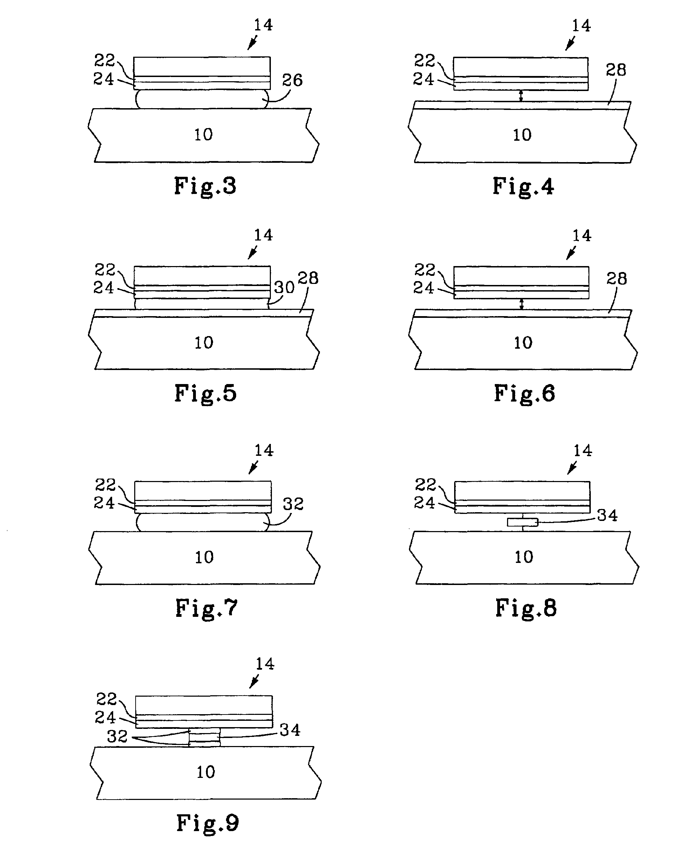

La liaison entre les carreaux 14 et la plaque support 10 doit assurer, à la fois, leur solidarisation mécanique et leur connexion électrique. Les figures 3 à 9 illustrent différentes manières d'effectuer cette liaison.

On notera que, dans les réalisations des figures 3 à 5, la plaque support 10 peut être réalisée dans tous les métaux précédemment cités, à l'exception de l'aluminium, alors que, dans les réalisations des figures 6 à 9, la plaque 10 est en aluminium préalablement désoxydé ou en un des métaux précédemment cités .

Sur la figure 3, la couche de liaison 24 est en argent. La liaison entre le carreau 14 et la plaque 10 est alors effectuée par une pâte 26 formée d'un mélange d'argent et de résine époxy dont la polymérisation est assurée par chauffage à une température appropriée.

Dans l'exemple de la figure 4, la couche de liaison 24 est encore en argent et la face supérieure de la plaque 10 est recouverte d'une couche d'argent 28, structurée aux dimensions correspondant à celles des carreaux à recevoir. Ces deux couches sont soudées ensemble par simple chauffage dans un four à une température ne dépassant pas 550 °C.

Selon le mode de réalisation de la figure 5, la couche de liaison 24 est toujours en argent et la face supérieure de la plaque 10 recouverte d'une couche d'argent structurée 28. Ces deux couches sont soudées ensemble au moyen d'un alliage étain-plomb 30 par chauffage à une température pouvant aller jusqu'à 350 °C.

Sur la figure 6, la couche de liaison 24 est en aluminium et la liaison entre le carreau 14 et la plaque support 10 en aluminium est réalisée par soudage direct sous vide à une température de 500 à 600 °C.

Dans l'exemple de la figure 7, la couche de liaison 24 est en aluminium et la liaison entre celle-ci et la plaque support 10 est effectuée au moyen d'une pâte aluminium-silicium 32, telle que celle commercialisée sous la dénomination Castolin190Al. L'opération se fait sous vide à une température de 500 à 600 °C.

Selon le mode de réalisation de la figure 8, la couche de liaison 24 est toujours en aluminium et la liaison est réalisée par l'intermédiaire d'une mini-plaquette en silicium 34 dont les deux faces sont recouvertes d'une couche d'aluminium. Cette plaquette est disposée au centre du carreau 14 et l'assemblage s'effectue par soudage direct sous vide à une température de 500 à 600 °C. La mini-plaquette 34 est avantageusement de forme carrée. Elle a, typiquement, une épaisseur de 0.5 à 1 mm et un côté de 2 à 10 mm.

Enfin, dans l'exemple de la figure 9, la couche de liaison 24 reste en aluminium et la liaison est effectuée par l'intermédiaire de la mini-plaquette 34 de la figure 8. Mais, dans ce cas, le soudage est fait avec la pâte aluminium-silicium 32 utilisée dans la réalisation de la figure 7.

Il convient de noter que les parties de la plaque support entre les carreaux doivent également être passivées. Cela peut être réalisé par une oxydation chimique ou électrochimique qui intervient lors de la première utilisation ou, encore, par un dépôt sélectif de PVDF, polyépoxyde ou tout autre polymère adéquat.

Ainsi, est proposée une grande électrode silicium-diamant de dimensions correspondant à celles des électrodes métalliques existantes mais restant à peu près plane mais flexible en toutes circonstances, sans risque de rupture sous contrainte mécanique. Les avantages des électrodes silicium-diamant peuvent, de ce fait, être pleinement exploités.

## Revendications

1. Electrode de grandes dimensions, **caractérisée en ce qu'**elle comporte:
- une plaque support métallique (10);
- une pluralité de carreaux (14) fixés sur une face (12) de ladite plaque en relation électrique avec elle et comportant chacun un substrat (18) à base de silicium rendu conducteur, avec, du côté plaque, une couche de liaison (24) et, du côté opposé, une couche de diamant rendu conducteur (20); et
- une couche isolante (16) recouvrant à la fois les portions de ladite face (12) qui ne sont pas recouvertes par les carreaux (14) et les flancs de ceux-ci.

2. Electrode selon la revendication 1, **caractérisée en ce que** le métal constituant la plaque support (10) est choisi parmi l'aluminium, le titane, le zirconium, le niobium, l'acier inoxydable et tout métal susceptible d'être passivé par formation, à sa surface, d'une couche isolante étanche et stable obtenue par oxydation chimique ou électrochimique.

3. Electrode selon la revendication 1, **caractérisée en ce que** le substrat (18) des carreaux (14) est en silicium ou carbure de silicium rendu conducteur par dopage à l'aide d'un métal tel que le titane, le zirconium ou le niobium.

4. Electrode selon la revendication 1, **caractérisée en ce que** la couche de liaison (24) des carreaux à la plaque support (10) est en aluminium, aluminium-silicium, argent, platine ou platine-argent.

5. Electrode selon la revendication 4, **caractérisée en ce qu'**une sous-couche d'accrochage en titane (22) est interposée entre le substrat (18) des carreaux et la couche de liaison (24).

6. Electrode selon la revendication 1, **caractérisée en ce que** la couche de diamant (20) des carreaux est rendue conductrice par dopage à l'aide de bore et/ou d'azote.

7. Electrode selon la revendication 1, **caractérisée en ce que** la couche de liaison (24) des carreaux est en argent et est fixée sur la plaque support (10) au moyen d'une pâte polymérisable à base d'argent (26).

8. Electrode selon la revendication 1, **caractérisée en ce que** la couche de liaison (24) des carreaux est en argent, la face (12) de la plaque support est recouverte d'une couche d'argent et ces deux couches sont soudées ensemble directement par chauffage.

9. Electrode selon la revendication 1, **caractérisée en ce que** la couche de liaison (24) des carreaux est en argent, la face (12) de la plaque support est recouverte d'une couche d'argent et ces deux couches sont soudées ensemble au moyen d'un alliage étain-plomb (30).

10. Electrode selon la revendication 1, **caractérisée en ce que** la couche de liaison (24) des carreaux est en aluminium et est soudée directement sur la plaque support (10).

11. Electrode selon la revendication 1, **caractérisée en ce que** la couche de liaison (24) des carreaux est en aluminium et est fixée sur la plaque support (10) par soudage au moyen d'un alliage d'aluminium-silicium (32).

12. Electrode selon la revendication 1, **caractérisée en ce que** la couche de liaison (24) des carreaux est en aluminium et est fixée sur la plaque support (10) par l'intermédiaire d'une mini-plaquette centrale en silicium (34) dont les deux faces, recouvertes d'une couche d'aluminium, sont respectivement soudées directement à la couche de liaison (24) et à la plaque (10).

13. Electrode selon la revendication 1, **caractérisée en ce que** la couche de liaison (24) des carreaux est en aluminium et est fixée sur la plaque support (10) par l'intermédiaire d'une mini-plaquette centrale en silicium (34) dont les deux faces, recouvertes d'une couche d'aluminium, sont respectivement liées à la couche de liaison (24) et à la plaque (10) au moyen d'une pâte polymérisable d'aluminium-silicium (32).

14. Electrode selon la revendication 1, **caractérisée en ce que** ladite couche isolante (16) est un oxyde du métal de la plaque support (10).
